# EUROPEAN PATENT APPLICATION

(11) **EP 4 509 538 A1**
(43) Date of publication of application: **19.02.2025**
(21) Application number: 22964110.5
(22) Date of filing: 04.11.2022
(51) Int. Cl.: C08F 259/08, C08F 214/18, C08F 214/22, C08F 214/24, C08F 214/26, C08F 214/28, H01M 4/62, H01M 4/36, H01M 10/00, H01M 50/414, H01M 50/449

(54) **CORE-SHELL STRUCTURE POLYMER, AQUEOUS PRIMER SLURRY, SECONDARY BATTERY, AND ELECTRICAL APPARATUS**

(71) Applicant: Contemporary Amperex Technology Co., Limited, Ningde, Fujian 352100 (CN)
(72) Inventor: FENG, Wei, NINGDE, Fujian 352100 (CN); LIU, Huihui, NINGDE, Fujian 352100 (CN); OUYANG, Chuying, NINGDE, Fujian 352100 (CN); SUN, Chengdong, NINGDE, Fujian 352100 (CN); ZHANG, Wenshuai, NINGDE, Fujian 352100 (CN); ZHANG, Shuai, NINGDE, Fujian 352100 (CN); ZUO, Huanhuan, NINGDE, Fujian 352100 (CN); ZHOU, Yongbin, NINGDE, Fujian 352100 (CN)
(74) Representative: Jacob, Reuben Ellis
(86) International application number: PCT/CN2022/130101
(87) International publication number: WO 2024/092808

(57) **Abstract**

A core-shell structure polymer, an aqueous primer slurry, a secondary battery, and an electrical apparatus. The core-shell structure polymer comprises a core part and a shell part at least partially covering the core part. The core part comprises a structural unit derived from a monomer represented by formula I. The shell part comprises a structural unit derived from the monomer represented by formula I, a structural unit derived from a monomer represented by formula II, and a structural unit derived from a monomer represented by formula III, wherein R 1 , R 2 and R 3 are each independently selected from hydrogen, fluorine, chlorine or C 1-3 alkyl containing at least one fluorine atom, R 4 , R 5 , R 6 , R 7 , R 8 , R 9 are each independently selected from hydrogen or substituted or unsubstituted C 1-3 alkyl, and Ar is a substituted or unsubstituted aryl.

## Description

### Technical Field

The present application relates to the technical field of secondary batteries, and in particular to a core-shell polymer, a preparation method, a water-based primer slurry, a secondary battery, and an electrical apparatus.

### Background

During the preparation process of the electrode plate of secondary batteries, a prime coat is applied between the current collector and the active material layer to provide electrical conduction between the active material layer and the current collector, thereby reducing the contact resistance between the active material layer and the current collector. The prime coat is often prepared by coating a primer slurry formulated with binders, conductive agents, and additives on the surface of the current collector. However, the primer slurry in the prior art has a short process window, poor filterability, and is prone to precipitation to block the pipeline, seriously affecting the production efficiency of the electrode plate. Therefore, there is an urgent need to develop a binder to improve the processing properties of the slurry.

### Summary of the Invention

The present application was made in view of the above issues, and its purpose is to provide a core-shell polymer and a water-based primer slurry comprising the core-shell polymer, so as to optimize the process window for the preparation of water-based primer slurries and improve the production efficiency of water-based primer slurries.

A first aspect of the present application provides a core-shell polymer comprising a core portion and a shell portion that at least partially covers the core portion, the core portion comprising a structural unit derived from a monomer represented by Formula I, the shell portion comprising a structural unit derived from a monomer represented by Formula I, a structural unit derived from a monomer represented by Formula II, and a structural unit derived from a monomer represented by Formula III, 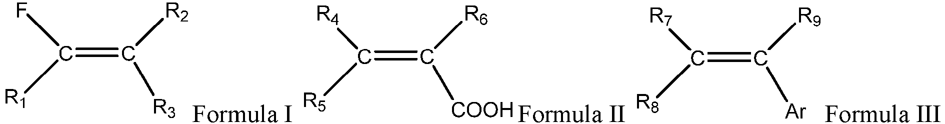 wherein, R₁, R₂ and R₃ are each independently selected from hydrogen, fluorine, chlorine or C₁₋₃ alkyl containing at least one fluorine atom, R₄, R₅, R₆, R₇, R₈, R₉ are each independently selected from hydrogen, substituted or unsubstituted C₁₋₅ alkyl, and Ar is substituted or unsubstituted aryl.

The core-shell polymer provided by the present application can reduce the viscosity of the slurry, improve the filterability of the slurry, significantly broaden the process window of the slurry, improve the processability of the slurry, and enable the slurry to meet the production needs of the prime coat without adding a dispersant, which is conducive to optimizing the production process of the prime coat and improving its production efficiency.

In any of embodiments, R₁ is fluorine, R₂ and R₃ are each independently selected from hydrogen, fluorine, chlorine or trifluoromethyl, R₄, R₅, R₆, R₇, R₈, R₉ are each independently selected from hydrogen or methyl.

In any of embodiments, the mass content of the core portion is 40% to 50%, based on the mass of the core-shell polymer.

By controlling the mass content of the core portion within an appropriate range, the core-shell polymer can take into account both the viscosity of the slurry and the adhesion of the electrode plate, and comprehensively improve the processability and usability of the water-based primer slurry.

In any of embodiments, the mass content of the structural unit derived from the monomer represented by Formula II is 10% to 40%, based on the mass of the core-shell polymer.

By controlling the mass content of the structural unit derived from the monomer represented by Formula II within an appropriate range, it can take into account both the viscosity of the slurry and the adhesiveness of the electrode plates, comprehensively improving the processability and usability of the slurry.

In any of embodiments, the mass content of the structural unit derived from the monomer represented by Formula III is 10% to 40%, based on the mass of the core-shell polymer.

By controlling the mass content of the structural unit derived from the monomer represented by Formula III within an appropriate range, it can take into account both the viscosity of the slurry and the adhesiveness of the electrode plates, and comprehensively improve the processability and usability of the slurry.

In any of embodiments, the weight average molecular weight of the core-shell polymer is 300,000-500,000.

By controlling the weight average molecular weight of the core-shell polymer within an appropriate range, it can take into account both the adhesiveness and the film resistance of the electrode plate, and comprehensively improve the adhesion and dynamic performance of the electrode plate.

In any of embodiments, the Dv50 particle size of the core-shell polymer is 100 nm to 10 µm.

In any of embodiments, the monomer represented by Formula I is selected from one or more of vinylidene fluoride, tetrafluoroethylene, chlorotrifluoroethylene, and hexafluoropropylene.

In any of embodiments, the monomer represented by Formula II is selected from one or two of acrylic acid and methacrylic acid.

In any of embodiments, the monomer represented by Formula III is selected from one or two of styrene and 4-methylstyrene.

A second aspect of the present application provides a preparation method of core-shell polymers. The preparation method comprises the following steps: polymerizing a monomer represented by Formula I under polymerizable conditions to prepare a core portion of the core-shell polymer, polymerizing a monomer represented by Formula I, a monomer represented by Formula II and a monomer represented by Formula III to prepare a shell portion of the core-shell polymer at least partially covering the core portion, 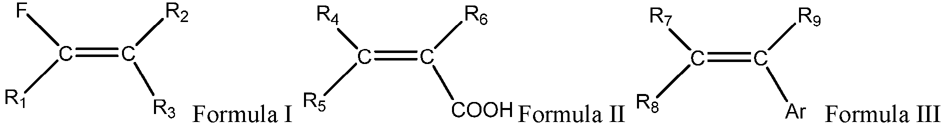 wherein, R₁, R₂ and R₃ are each independently selected from hydrogen, fluorine, chlorine or C₁₋₃ alkyl containing at least one fluorine atom, R₄, R₅, R₆, R₇, R₈, R₉ are each independently selected from hydrogen, substituted or unsubstituted C₁₋₅ alkyl, and Ar is substituted or unsubstituted aryl.

The core-shell polymer prepared by this method can reduce the viscosity of the slurry, improve the filterability of the slurry, significantly broaden the process window of the slurry, improve the processability of the slurry, and enable the slurry to meet the production needs of the prime coat without adding a dispersant, which is conducive to optimizing the production process of the prime coat and improving its production efficiency.

In any of embodiments, the R₁ is fluorine, the R₂ and R₃ are each independently selected from one or more of hydrogen, fluorine, chlorine and trifluoromethyl, and the R₄, R₅, R₆, R₇, R₈, R₉ are each independently selected from one or two of hydrogen and methyl.

In any of embodiments, the mass content of the core portion is 40% to 50%, based on the mass of the core-shell polymer.

In any of embodiments, the mass content of the monomer represented by Formula II is 10% to 40%, based on the total mass of the monomer represented by Formula I, the monomer represented by Formula II, and the monomer represented by Formula III.

In any of embodiments, the mass content of the monomer represented by Formula III is 10% to 40%, based on the total mass of the monomer represented by Formula I, the monomer represented by Formula II, and the monomer represented by Formula III.

In any of embodiments, the preparation method comprises a first-stage polymerization and a second-stage polymerization,
first-stage polymerization: providing an initiator, a first emulsifier, at least one monomer represented by Formula I, and a water-based medium to perform the first-stage polymerization to obtain the core portion, wherein the monomer represented by Formula I is continuously introduced during the first-stage polymerization;
second-stage polymerization: after reacting for a period of time, adding an initiator, a second emulsifier, at least one monomer represented by Formula II and monomer represented by Formula III, and a water-based medium into the reaction vessel to perform the second-stage polymerization to obtain the core-shell polymer, wherein the monomer represented by Formula I is continuously introduced during the second-stage polymerization.

The method provided by the present application first continuously feeds the monomer represented by Formula I to form a fluorine-containing core portion, so that the core portion has high thermal stability; then, the monomer represented by Formula I, the monomer represented by Formula II and the monomer represented by Formula III are introduced to form the core-shell polymer. In an emulsion system, a core-shell polymer is obtained by polymerizing monomers with different hydrophilicity in steps. The core-shell polymer exists in the form of a core-shell structure in a water-based medium. Compared with non-core-shell polymers prepared by adding all the monomers into the reaction vessel at the same time, the stability and dispersibility of the core-shell polymer are greatly improved, which improves the filterability and dispersibility of the water-based primer slurry, reduces the film resistance of the electrode plate while further broadening the process window of the slurry, helping to improve the production efficiency of the water-based primer. At the same time, since the structural units derived from the monomer represented by Formula II are all distributed in the shell portion, the carboxyl groups in the shell portion can improve the adhesion of the core-shell polymer, thereby improving the adhesiveness of the electrode plate. In addition, when feeding the monomer represented by Formula II and the monomer represented by Formula III into the reaction vessel for the second-stage polymerization, the monomer represented by Formula I is continuously introduced into the reaction vessel, which increases the compatibility between the core portion and the shell portion and improves the stability of the core-shell polymer.

In any of embodiments, the second-stage polymerization comprises:
adding the initiator into the reaction vessel, and then adding a premix comprising a second emulsifier, at least one monomer represented by Formula II, monomer represented by Formula III, and a water-based medium.

In any of embodiments, the mass of the monomer represented by Formula I introduced in the first-stage polymerization is 70% to 85% of the total mass of the monomer represented by Formula I supplied in the polymerization, and the mass of the monomer represented by Formula I introduced in the second-stage polymerization is 15% to 30% of the total mass of the monomer represented by Formula I introduced during the polymerization.

In any of embodiments, the initiator provided in the first-stage polymerization and the initiator provided in the second-stage polymerization are both persulfates, the mass percentage of the initiator provided in the first-stage polymerization is 0.05% to 0.075%, and the mass percentage of the initiator provided in the second-stage polymerization is 0.05% to 0.075%, based on the total mass of the monomer represented by Formula I, the monomer represented by Formula II and the monomer represented by Formula III.

In any of embodiments, the mass percentage of the first emulsifier is 0.28% to 0.42%, based on the total mass of the monomer represented by Formula I, the monomer represented by Formula II, and the monomer represented by Formula III.

In any of embodiments, the mass percentage of the second emulsifier is 0.8% to 1.2%, based on the total mass of the monomer represented by Formula I, the monomer represented by Formula II, and the monomer represented by Formula III.

In any of embodiments, the mass percentage of the water-based medium provided in the first-stage polymerization is 200% to 500%, and the mass percentage of the water-based medium provided in the second-stage polymerization is 100% to 200%, based on the total mass of the monomer represented by Formula I, the monomer represented by Formula II and the monomer represented by Formula III.

In any of embodiments, the reaction pressure of the first-stage polymerization is 5.5MPa to 7.5MPa, and the reaction temperature is 75°C to 85°C.

In any of embodiments, the reaction pressure of the second-stage polymerization is 4.5MPa to 6.5MPa, and the reaction temperature is 86°C to 95°C.

In any of embodiments, the initiator may be selected from one or two of potassium persulfate and ammonium persulfate.

In any of embodiments, the first emulsifier is an alkali metal perfluorooctanoate.

In any of embodiments, the second emulsifier is one or two of polyoxyethylene-4-phenol ether ammonium sulfate and nonylphenol polyoxyethylene ether ammonium sulfate.

A third aspect of the present application provides an emulsion-type binder comprising the core-shell polymer according to the first aspect.

The emulsion-type binder is a direct product of the preparation method of core-shell polymers in the second aspect, and can be directly used as a binder for the water-based primer slurry, thereby reducing production costs and improving production efficiency.

A fourth aspect of the present application provides use of the core-shell polymer according to the first aspect in secondary batteries.

A fifth aspect of the present application provides a water-based primer slurry, comprising a binder, a conductive agent and a water-based medium, where the binder comprises the core-shell polymer according to the first aspect.

Compared with non-core-shell polymers, the core-shell polymer has improved stability and dispersibility, which improves the filterability and dispersibility of the water-based primer slurry, and reduces the film resistance of the electrode plate.

In any of embodiments, the core-shell polymer is added to the water-based primer slurry in the form of an emulsion comprising the core-shell polymer.

The core-shell polymer prepared by the preparation method according to the second aspect is in the form of emulsion and can be directly added to the water-based primer slurry for use, which reduces production costs and improves production efficiency.

In any of embodiments, the mass ratio of the conductive agent to the binder is 0.8:1 to 1:1.

By controlling the mass ratio of conductive agent to binder within an appropriate range, it can take into account the adhesiveness and film resistance of the slurry electrode plate, and comprehensively improve the adhesion and dynamic performance of the electrode plate.

In any of embodiments, when the solid content of the water-based primer slurry is 10% to 20%, the viscosity of the water-based primer slurry is 300 mPa·s to 900 mPa·s.

By controlling the mass content of the water-based primer slurry within an appropriate range, it can take into account both the viscosity of the slurry and the adhesiveness of the electrode plate, and comprehensively improve the processability and usability of the slurry.

The viscosity of a water-based primer slurry with a solid content of 10% to 20% is 300mPa·s to 900mPa·s, which makes it unnecessary to add additional dispersants or thickeners to the water-based primer slurry prepared from core-shell polymers to improve processability, helping improve production efficiency and optimize production processes.

A sixth aspect of the present application provides a method for preparing a water-based prime coat, comprising steps of:
coating the water-based primer slurry according to the fifth aspect on the surface of a current collector by using a gravure coater;
drying to obtain a water-based prime coat with a thickness of 1um to 3um.

Through the preparation method of the water-based prime coat disclosed in the present application, the adhesiveness of the electrode plate can be improved and the film resistance of the electrode plate can be reduced.

A seventh aspect of the present application provides a secondary battery comprising a positive electrode plate, a separator, a negative electrode plate and an electrolyte solution, wherein the positive electrode plate and/or the negative electrode plate comprises the water-based prime coat prepared by the preparation method according to the sixth aspect of the present application..

In any of embodiments, the secondary battery includes at least one of a lithium-ion battery, a sodium-ion battery, a magnesium-ion battery, and a potassium-ion battery.

An eighth aspect of the present application provides a battery module comprising the secondary battery of the seventh aspect of the present application.

A ninth aspect of the present application provides a battery pack comprising the secondary battery of the seventh aspect of the present application or the battery module of the eighth aspect of the present application.

A tenth aspect of the present application provides an electrical apparatus comprising at least one selected from the secondary battery of the seventh aspect of the present application, the battery module of the eighth aspect of the present application, or the battery pack of the ninth aspect of the present application.

### Description of Drawings

Fig. 1 is a schematic structural diagram of a core-shell polymer according to an embodiment of the present application;
Fig. 2 is a schematic diagram of a secondary battery according to an embodiment of the present application;
Fig. 3 is an exploded view of the secondary battery according to an embodiment of the present application shown in Fig. 2;
Fig. 4 is a schematic diagram of a battery module according to an embodiment of the present application;
Fig. 5 is a schematic diagram of a battery pack according to an embodiment of the present application;
Fig. 6 is an exploded view of the battery pack according to an embodiment of the present application shown in Fig. 5;
Fig. 7 is a schematic view of an electrical apparatus using a secondary battery as a power source according to an embodiment of the present application.

Description of reference numerals:
1 battery pack; 2 upper box; 3 lower box; 4 battery module; 5 secondary battery; 51 case; 52 electrode assembly; 53 cover plate; 6 core-shell polymer; 61 core portion; 62 shell portion.

### Detailed Description

Hereinafter, embodiments of the binder, the preparation method thereof, the electrode, the battery, and the electrical apparatus of the present application are described in detail and specifically disclosed with reference to the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless otherwise stated, the numerical range "a-b" is an abbreviated representation of any real number combination between a and b, where a and b are both real numbers. For example, the numerical range "0-5" indicates that all real numbers between "0-5" are listed herein, and "0-5" is only a abbreviated representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the "including" and "comprising" mentioned in the present application mean open-ended, or may be closed-ended. For example, the "including" and "comprising" may indicate that it is also possible to include or comprise other components not listed, and it is also possible to include or comprise only the listed components.

If not specifically stated, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

The conductivity of electrodes is one of the most important research topics for secondary batteries. During the preparation process of secondary battery electrodes, a prime coat is coated between the current collector and the active material layer to provide electrical conduction between the active material layer and the current collector, thereby reducing the contact resistance between the active material layer and the current collector, making the electrode plate have good electronic conductivity and ionic conductivity, and improving the dynamic performance of the battery. In the prior art, binders and conductive agents are generally used to prepare the prime coat. Traditional polyvinylidene fluoride binders will make the slurry highly viscous and have poor filterability, making it difficult to coat uniformly. Therefore, during slurry preparation, it needs to add dispersants to improve the processability of the slurry. This will undoubtedly increase the difficulty of processing the slurry, affect production efficiency, and lead to poor stability of the slurry between batches. Based on the above technical problems, the present application develops a binder that makes the water-based primer slurry have appropriate viscosity and excellent filterability, so as to improve the production efficiency and production quality of the prime coat.

### [Core-shell polymer]

Based on this, the present application provides a core-shell polymer comprising a core portion and a shell portion that at least partially covers the core portion, the core portion comprising a structural unit derived from a monomer represented by Formula I, the shell portion comprising a structural unit derived from a monomer represented by Formula I, a structural unit derived from a monomer represented by Formula II, and a structural unit derived from a monomer represented by Formula III, 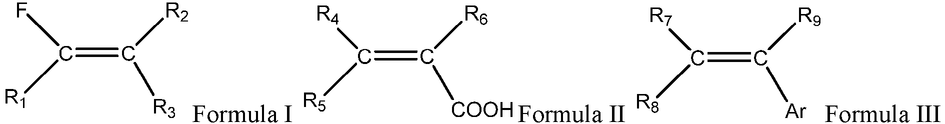 wherein, R₁, R₂ and R₃ are each independently selected from hydrogen, fluorine, chlorine or C₁₋₃ alkyl containing at least one fluorine atom, R₄, R₅, R₆, R₇, R₈, R₉ are each independently selected from hydrogen, substituted or unsubstituted C₁₋₅ alkyl, and Ar is substituted or unsubstituted aryl.

In that present invention, the term "polymer" includes, on the one hand, aggregates of macromolecules which are chemically uniform but differ in degree of polymerization, molar mass, and chain length, prepared by polymerization. The term on the other hand also includes derivatives of such aggregates of macromolecules formed by polymerization, that is, products that are obtainable by reaction, for example addition or substitution, of functional groups in the macromolecules and that may be chemically homogeneous or chemically uneven.

As used herein, the term" trifluoromethyl" refers to the -CF₃ group.

As used herein, the term "C₁₋₅ alkyl" refers to a linear or branched hydrocarbon chain radical consisting solely of carbon and hydrogen atoms, with no unsaturation present in the radical, having from one to five carbon atoms, and attached to the rest of the molecule by a single bond. The term "C₁₋₃ alkyl" should be interpreted accordingly. Examples of C₁₋₅ alkyl includes, but it not limited to: methyl, ethyl, n-propyl, 1-methylethyl (isopropyl), butyl, pentyl. In some embodiments, the C₁₋₃ alkyl containing at least one fluorine atom is -CF₃, -CH₃CH₂F, or -CH₂FCH₂F.

In the present invention, the term "substituted" means that at least one hydrogen atom of the compound or chemical moiety is substituted by another chemical moiety, wherein the substituents are each independently selected from the group consisting of hydroxyl, mercapto, amino, cyano, nitro, aldehyde, halogen atom, alkenyl, alkynyl, aryl, heteroaryl, C₁₋₆ alkyl, C₁₋₆ alkoxy.

As used herein, the term "aryl" refers to a functional group or substituent derived from a simple aromatic ring, such as phenyl, o-tolyl, 1-naphthyl (or α-naphthyl).

In some embodiments, the R₁ is fluorine, the R₂ and R₃ are each independently selected from one or more of hydrogen, fluorine, chlorine and trifluoromethyl, and the R₄, R₅, R₆, R₇, R₈, R₉ are each independently selected from one or two of hydrogen and methyl.

In some embodiments, the monomer represented by Formula I is selected from one or more of vinylidene fluoride, tetrafluoroethylene, chlorotrifluoroethylene, and hexafluoropropylene.

In some embodiments, the monomer represented by Formula II is selected from one or two of acrylic acid and methacrylic acid.

In some embodiments, the monomer represented by Formula III is selected from one or two of styrene and 4-methylstyrene.

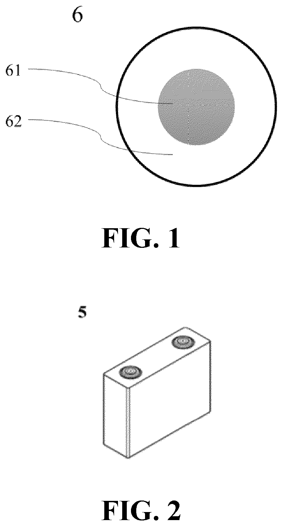

Fig. 1 is a schematic structural diagram of a core-shell polymer in an embodiment of the present application. The core-shell polymer 6 includes a core portion 61 and a shell portion 62. The shell portion 62 covers the surface of the core portion 61. The core portion 61 comprises a structural unit derived from a monomer represented by Formula I, the core portion 61 comprise a fluorine-containing structural unit, which can increase the thermal stability of the structure; the shell portion comprises a structural unit derived from a monomer represented by Formula I, a structural unit derived from a monomer represented by Formula II and a structural unit derived from a monomer represented by Formula III, and the shell portion contains carboxyl, which can improve the adhesion of the structure. Compared with traditional polyvinylidene fluoride, core-shell polymers have fluorine-containing units located in the core portion and fluorine-free units located in the shell portion, which reduces the contact area between the fluorine-containing structural units and the solvent, thereby reducing slurry viscosity, stabilizing the slurry, alleviating the settling of the slurry and effectively improving the filterability of the slurry.

The core-shell polymer provided by the present application can reduce the viscosity of the slurry, improve the filterability of the slurry, significantly broaden the process window of the slurry, improve the processability of the slurry, and enable the slurry to meet the production needs of the water-based prime coat without adding a dispersant, which is conducive to optimizing the production process of the water-based prime coat and improving its production efficiency.

As used herein, the term "process window" refers to the process ranges that can ensure product quality, including but not limited to temperature range, pressure range, storage time length, etc. It can be understood that the wider the process window, the lower the demand for process accuracy.

**In** some embodiments, the mass content of the core portion is 40% to 50%, based on the mass of the core-shell polymer. In some embodiments, the mass content of the core portion is optionally any one of 40%, 45% and 50%, based on the mass of the core-shell polymer.

The mass content of the core portion is controlled within a suitable range so that the slurry has a suitable viscosity, which on the one hand makes the electrode plate has good adhesiveness, and on the other hand, can also facilitate the subsequent coating processing and coating drying, and comprehensively improve the processability and usability of the slurry.

In some embodiments, the mass content of the structural unit derived from the monomer represented by Formula II is 10% to 40%, based on the mass of the core-shell polymer. In some embodiments, the mass content of the structural unit derived from the monomer represented by Formula II is optionally any one of 10%, 20%, 30% and 40%, based on the mass of the core-shell polymer.

The mass content of the structural unit derived from the monomer represented by Formula II is controlled within a suitable range so that the slurry has a suitable viscosity, which on the one hand makes the electrode plate has good adhesiveness, and on the other hand, can also facilitate the subsequent coating processing and coating drying, and comprehensively improve the processability and usability of the slurry.

In some embodiments, the mass content of the structural unit derived from the monomer represented by Formula III is 10% to 40%, based on the mass of the core-shell polymer. In some embodiments, the mass content of the structural unit derived from the monomer represented by Formula III is optionally any one of 10%, 20%, 30% and 40%, based on the mass of the core-shell polymer.

The mass content of the structural unit derived from the monomer represented by Formula III is controlled within a suitable range so that the slurry has a suitable viscosity, which on the one hand makes the electrode plate has good adhesiveness, and on the other hand, can also facilitate the subsequent coating processing and coating drying, and comprehensively improve the processability and usability of the slurry.

In some embodiments, the weight average molecular weight of the core-shell polymer is 300,000-500,000. In some embodiments, the weight average molecular weight of the core-shell polymer is optionally any one of 300,000, 400,000 and 500,000.

As used herein, the term "weight average molecular weight" refers to the sum of the weight fractions of molecules of different molecular weights in the polymer multiplied by their corresponding molecular weights.

In the present application, the weight average molecular weight of the polymer can be measured using methods known in the art, such as gel chromatography using, for example, a Waters 2695 Isocratic HPLC gel chromatograph (differential refraction detector 2141). In some embodiments, the test method involves, with a polystyrene solution sample with a mass fraction of 3.0% as a reference, selecting a matching chromatographic column (oil-based: Styragel HT5DMF7.8*300 mm+Styragel HT4). A 3.0% core-shell polymer colloidal solution is prepared using purified N-methyl pyrrolidone (NMP) solvent. The prepared solution should be left to stand for one day for later use. When testing, first, tetrahydrofuran was drawn with a syringe to rinse the syringe, which was repeated several times. Then 5 ml of the test solution was drawn, the air was removed from the syringe, and the needle tip was wiped dry. Finally, the sample solution was slowly injected into the injection port. After the reading became stable, data were obtained and the weight average molecular weight was read.

Controlling the weight average molecular weight of the core-shell polymer within an appropriate range will facilitate the dispersion of the core-shell polymer in the water-based primer slurry and prevent it from agglomerating with the conductive agent, thereby improving the dispersibility of the conductive agent and reducing the film resistance of the electrode plate. At the same time, core-shell polymers with a suitable range of weight average molecular weight can form a three-dimensional network bonding structure to achieve effective bonding.

To sum up, by controlling the weight average molecular weight of the core-shell polymer within an appropriate range, it can take into account both the adhesion and the film resistance of the electrode plate, and comprehensively improve the adhesion and dynamic performance of the electrode plate.

In some embodiments, the Dv50 particle size of the core-shell polymer is 100 nm to 10 µm. In some embodiments, the Dv50 particle size of the core-shell polymer is optionally any one of 100 nm to 1000 nm, 500 nm to 1000 nm, and 500 nm to 10 µm.

As used herein, the term "Dv50 particle size" refers to the particle size corresponding to the cumulative number of particle size distribution of 50% in the particle size distribution curve. Physically, it means that particles with a particle size less than (or greater than) it account for 50%.

An embodiment of the present application provides a preparation method of core-shell polymers, comprising the following steps,
polymerizing a monomer represented by Formula I under polymerizable conditions to prepare a core portion of the core-shell polymer, and polymerizing a monomer represented by Formula I, a monomer represented by Formula II and a monomer represented by Formula III to prepare a shell portion of the core-shell polymer at least partially covering the core portion, 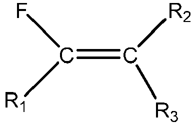 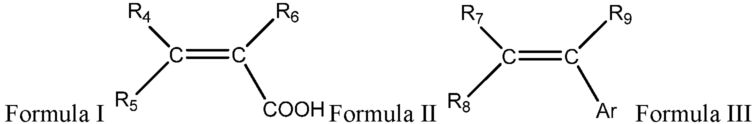 wherein, R₁, R₂ and R₃ are each independently selected from hydrogen, fluorine, chlorine or C₁₋₃ alkyl containing at least one fluorine atom, R₄, R₅, R₆, R₇, R₈, R₉ are each independently selected from hydrogen, substituted or unsubstituted C₁₋₅ alkyl, and Ar is substituted or unsubstituted aryl.

As used herein, the term "polymerizable conditions" refers to temperature, pressure, reactant concentration, optional solvent/diluent, reactant mixing/addition parameters and other conditions facilitating the reaction of one or more monomers in at least one polymerization reactor as selected by one skilled in the art.

The core-shell polymer prepared by this method can reduce the viscosity of the slurry, improve the filterability of the slurry, significantly broaden the process window of the slurry, improve the processability of the slurry, and enable the slurry to meet the production needs of the water-based prime coat without adding a dispersant, which is conducive to optimizing the production process of the water-based prime coat and improving its production efficiency.

In some embodiments, R₁ is fluorine, R₂ and R₃ are each independently selected from hydrogen, fluorine, chlorine or trifluoromethyl, R₄, R₅, R₆, R₇, R₈, R₉ are each independently selected from hydrogen or methyl.

In some embodiments, the mass content of the core portion is 40% to 50%, based on the mass of the core-shell polymer. In some embodiments, the mass content of the core portion is optionally any one of 40%, 45% and 50%.

In some embodiments, the mass content of the monomer represented by Formula II is 10% to 40%, based on the total mass of the monomer represented by Formula I, the monomer represented by Formula II, and the monomer represented by Formula III. In some embodiments, the mass content of the monomer represented by Formula II is optionally any one of 10%, 20%, 30% and 40%, based on the total mass of the monomer represented by Formula I, the monomer represented by Formula II, and the monomer represented by Formula III.

In some embodiments, the mass content of the monomer represented by Formula III is optionally any one of 10%, 20%, 30% and 40%, based on the total mass of the monomer represented by Formula I, the monomer represented by Formula II, and the monomer represented by Formula III.

In some embodiments, the preparation method comprises a first-stage polymerization and a second-stage polymerization,
first-stage polymerization: providing an initiator, a first emulsifier, at least one monomer represented by Formula I, and a water-based medium to perform the first-stage polymerization to obtain the core portion, wherein the monomer represented by Formula I is continuously introduced during the first-stage polymerization;
second-stage polymerization: after reacting for a period of time, adding an initiator, a second emulsifier, at least one monomer represented by Formula II and monomer represented by Formula III, and a water-based medium into the reaction vessel to perform the second-stage polymerization to obtain the core-shell polymer, wherein the monomer represented by Formula I is continuously introduced during the second-stage polymerization.

The method provided by the present application first continuously feeds the monomer represented by Formula I to form a fluorine-containing core portion, so that the core portion has high thermal stability; then, the monomer represented by Formula I, the monomer represented by Formula II and the monomer represented by Formula III are introduced to form the core-shell polymer. In an emulsion system, a hydrophobic monomer represented by Formula I is added for first-stage polymerization to form a core portion, and then hydrophilic monomers including a monomer represented by Formula II and a monomer represented by Formula III and the monomer represented by Formula I are added for second-stage polymerization to form a shell portion. The resulting core-shell polymer exists in the form of a core-shell structure in a water-based medium. Compared with non-core-shell polymers prepared by adding all the monomers into the reaction vessel at the same time, the stability and dispersibility of the core-shell polymer are greatly improved, which improves the filterability and dispersibility of the water-based primer slurry, reduces the film resistance of the electrode plate while further broadening the process window of the slurry, helping to improve the production efficiency of the water-based primer. At the same time, since the structural units derived from the monomer represented by Formula II are all distributed in the shell portion, the carboxyl groups in the shell portion can improve the adhesion of the electrode plate. In addition, when feeding the monomer represented by Formula II and the monomer represented by Formula III into the reaction vessel for the second-stage polymerization, the monomer represented by Formula I is continuously introduced into the reaction vessel, which increases the compatibility between the core portion and the shell portion and improves the stability of the core-shell polymer.

As used herein, the term "hydrophobic" refers to the physical property of a molecule that repels water.

As used herein, the term "hydrophilic" refers to the physical property of a molecule that enables it to form transient bonds with water through hydrogen bonding.

In some embodiments, the mass of the monomer represented by Formula I introduced in the first-stage polymerization is 70% to 85% of the total mass of the monomer represented by Formula I supplied in the polymerization, and the mass of the monomer represented by Formula I introduced in the second-stage polymerization is 15% to 30% of the total mass of the monomer represented by Formula I introduced during the polymerization.

In some embodiments, the second-stage polymerization comprises: adding the initiator into the reaction vessel, and then adding a premix comprising a second emulsifier, at least one monomer represented by Formula II, monomer represented by Formula III, and a water-based medium.

In some embodiments, the initiator provided in the first-stage polymerization and the initiator provided in the second-stage polymerization are persulfates, the mass percentage of the initiator provided in the first-stage polymerization is 0.05% to 0.075%, and the mass percentage of the initiator provided in the second-stage polymerization is 0.05% to 0.075%, based on the total mass of the monomer represented by Formula I, the monomer represented by Formula II and the monomer represented by Formula III.

In some embodiments, the mass percentage of the first emulsifier is 0.28% to 0.42%, based on the total mass of the monomer represented by Formula I, the monomer represented by Formula II, and the monomer represented by Formula III.

In some embodiments, the mass percentage of the second emulsifier is 0.8% to 1.2%, based on the total mass of the monomer represented by Formula I, the monomer represented by Formula II, and the monomer represented by Formula III.

In some embodiments, the mass percentage of the water-based medium provided in the first-stage polymerization is 200% to 500%, and the mass percentage of the water-based medium provided in the second-stage polymerization is 100% to 200%, based on the total mass of the monomer represented by Formula I, the monomer represented by Formula II and the monomer represented by Formula III.

In some embodiments, the water-based medium provided in the first-stage polymerization and the water-based medium provided in the second-stage polymerization are deionized water.

In some embodiments, the reaction pressure of the first-stage polymerization is 5.5MPa to 7.5MPa, and the reaction temperature is 75°C to 85°C.

In some embodiments, the reaction pressure of the second-stage polymerization is 4.5MPa to 6.5MPa, and the reaction temperature is 86°C to 95°C.

In some embodiments, the initiator may be selected from one or more of potassium persulfate and ammonium persulfate.

Ammonium persulfate or potassium persulfate can be effectively decomposed above 60°C to produce free radical ions or ionic radicals, and they are suitable as initiators for emulsion polymerization.

In some embodiments, the first emulsifier is an alkali metal perfluorooctanoate, optionally sodium perfluorooctanoate.

Alkali metal perfluorooctanoate is often used as an emulsifier or dispersant in the polymerization of fluorinated monomers.

In some embodiments, the second emulsifier is one or two of polyoxyethylene-4-phenol ether ammonium sulfate and nonylphenol polyoxyethylene ether ammonium sulfate.

Polyoxyethylene-4-phenol ether ammonium sulfate and nonylphenol polyoxyethylene ether ammonium sulfate are anionic-nonionic emulsifiers. They have both anionic and nonionic properties, and during emulsion polymerization, can be used alone and need not to be used in conjunction with other emulsifiers.

In one embodiment of the present application, an emulsion-type binder is provided, which comprises the core-shell polymer in any of embodiments.

The emulsion-type binder is a direct product of the preparation method of the core-shell polymer in any of embodiments, and can be directly used as a binder for the water-based primer slurry, thereby reducing production costs and improving production efficiency.

In one embodiment of the present application, there is provided use of the core-shell polymer in any of embodiments in a secondary battery. Optionally, the secondary battery includes at least one of a lithium-ion battery, a sodium-ion battery, a magnesium-ion battery, and a potassium-ion battery.

In some embodiments, core-shell polymers are used as binders in secondary batteries.

In some embodiments, core-shell polymers are used as binders of the water-based prime coat in secondary batteries.

### [Water-based primer slurry]

An embodiment of the present application provides a water-based primer slurry, comprising a binder, a conductive agent and a water-based medium, where the binder comprises the core-shell polymer according to any of embodiments.

As used herein, the term "binder" refers to a chemical compound, polymer or mixture that forms a colloidal solution or colloidal dispersion in a dispersion medium.

In some embodiments, the dispersion medium for the binder is a water-based medium, such as deionized water. That is, the binder is dissolved in the water-based medium.

Compared with non-core-shell polymers, the core-shell polymer has improved stability and dispersibility, which improves the filterability of the water-based primer slurry, improves the dispersibility of the water-based primer slurry, and reduces the film resistance of the electrode plate.

In some embodiments, the core-shell polymer is added to the water-based primer slurry in the form of an emulsion comprising the core-shell polymer.

The core-shell polymer prepared by the preparation method in any of embodiments is in the form of emulsion and can be directly added to the primer slurry for use, which reduces production costs and improves production efficiency.

In some embodiments, the conductive agent may include at least one of superconducting carbon, acetylene black, carbon black, Ketjen black, carbon dot, carbon nanotubes, graphene, and carbon nanofibers.

In some embodiments, the water-based medium is deionized water.

In some embodiments, the mass ratio of the conductive agent to the binder is 0.8:1 to 1:1.

By controlling the mass ratio of conductive agent to binder within an appropriate range, it can take into account the adhesiveness and film resistance of the slurry electrode plate, and comprehensively improve the adhesion and dynamic performance of the electrode plate.

In some embodiments, when the solid content of the water-based primer slurry is 10% to 20%, the viscosity of the water-based primer slurry is 300 mPa·s to 900 mPa·s.

In some embodiments, the solid content of the water-based primer slurry is optionally any one of 10%, 15%, 18%, and 20%.

In some embodiments, the viscosity of the water-based primer slurry is optionally any one of 350mPa·s to 900mPa·s, 350mPa·s to 800mPa·s, 380mPa·s to 800mPa·s, 400mPa·s to 800mPa·s, 350mPa·s to 700mPa·s, 400mPa·s to 700mPa·s.

The solid content of the water-based primer slurry is controlled within a suitable range so that the electrode plate has a good adhesiveness, and at the same time the slurry has a suitable viscosity, which facilitates the subsequent coating processing and coating drying, and comprehensively improves the processability and usability of the slurry.

The viscosity of a water-based primer slurry with a solid content of 10% to 20% is 300mPa·s to 900mPa·s, which makes it unnecessary to add additional dispersants or thickeners to the water-based primer slurry prepared from the core-shell binder to improve processability, helping improve production efficiency and optimize production processes.

### [Water-based prime coat]

An embodiment of the present application provides a method for preparing a water-based prime coat, comprising steps of:
coating the primer slurry according to the fourth aspect on the surface of a current collector by using a gravure coater;
drying to obtain a water-based prime coat with a thickness of 1um to 3um.

Through the preparation method of the water-based prime coat disclosed in the present application, the adhesiveness of the electrode plate can be improved and the film resistance of the electrode plate can be reduced.

In an embodiment of the present application, provided is a secondary battery comprising a positive electrode plate, a separator, a negative electrode plate, and an electrolyte, and the positive electrode plate and/or the negative electrode plate comprises the water-based prime coat in any of embodiments. In some embodiments, the secondary battery includes at least one of a lithium-ion battery, a sodium-ion battery, a magnesium-ion battery, and a potassium-ion battery. During the charging and discharging process of the battery, active ions are intercalated and deintercalated back and forth between the positive electrode plate and the negative electrode plate. The electrolyte serves to conduct ions between the positive electrode plate and the negative electrode plate. The separator is provided between the positive electrode plate and the negative electrode plate, and mainly serves to prevent a short circuit between the positive electrode and the negative electrode while allowing ions to pass through.

### [Positive electrode plate]

The positive electrode plate includes a positive electrode current collector and a positive electrode film layer and a water-based prime coat provided on at least one surface of the positive electrode current collector.

As an example, the positive-electrode current collector has two opposite surfaces in its own thickness direction, and the positive electrode film layer and the water-based prime coat are arranged on either or both of the two opposite surfaces of the positive-electrode current collector.

In some embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector can be formed by forming a metal material (aluminium, aluminium alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. As an example, the positive electrode active material may include at least one of the following materials: lithium-containing phosphate with olivine structure, lithium transition metal oxide, and their respective modified compounds. However, the present application is not limited to these materials, and other conventional materials useful as positive electrode active materials for batteries can also be used. It is possible to use only one of these positive electrode active materials alone, or to use more than two in combination. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. For example, the conductive agent may include at least one of superconducting carbon, acetylene black, carbon black, Ketjen black, carbon dot, carbon nanotubes, graphene, and carbon nanofibers.

In some embodiments, the positive electrode plate can be prepared as follows: the components used for preparing the water-based prime coat in any embodiment, such as an emulsion of the core-shell polymer and the conductive agent, are dispersed in a solvent (such as deionized water) to form a water-based primer slurry, then the water-based primer slurry is coated on an aluminum foil current collector by using a gravure coater, and dried to form a water-based prime coat, that is, a water-based primer current collector; the above-mentioned components for preparing the positive electrode film layer, such as the positive electrode active material, the conductive agent, the binder and any other components are dispersed in a solvent (such as N-methyl pyrrolidone) to form a positive electrode slurry; and the positive electrode slurry is applied on the water-based primer current collector, and then subjected to oven drying, cold pressing and other procedures, to obtain the positive electrode plate.

### [Negative electrode plate]

The negative electrode plate comprises a negative current collector, and a negative electrode film layer disposed on at least one surface of the negative current collector.

As an example, the negative electrode current collector has two opposite surfaces in its own thickness direction, and the negative electrode film layer is provided on either one or two of the two opposite surfaces of the negative electrode current collector.

In some embodiments, the negative electrode current collector can be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, a negative electrode active material for batteries well known in the art can be used as the negative electrode active material. As an example, the negative electrode active material may include at least one of the following materials: artificial graphite, natural graphite, soft carbon, hard carbon, silicon-based material, tin-based material, and lithium titanate, etc. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally comprise other auxiliaries, for example, a thickener (e. g., sodium carboxymethyl cellulose (CMC-Na)) and the like.

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution further optionally comprises an additive. For example, the additive may include a negative electrode film-forming additive, positive electrode film-forming additive, and may also include additives that can improve certain battery properties, such as additives that improve battery overcharge performance, additives that improve battery high or low temperature performance, and the like.

### [Separator]

In some embodiments, the secondary battery also comprises a separator. The type of the separator is not particularly limited in the present application, and any well-known separator with a porous structure having good chemical stability and mechanical stability may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode plate, the negative electrode plate, and the separator can be made into an electrode assembly by a winding process or a stacking process.

In some embodiments, the secondary battery may include an outer package. The outer package can be used to encapsulate the above-mentioned electrode assembly and electrolyte.

In some embodiments, the outer package of the secondary battery may be a hard shell, e.g., a hard plastic shell, an aluminum shell, a steel shell, etc. The outer package of the secondary battery may also be a soft pack, such as a bag-type soft pack. The material of the soft package can be plastic, and as plastic, polypropylene, polybutylene terephthalate, and polybutylene succinate can be enumerated.

The present application has no particular limitation on the shape of the secondary battery, which can be cylindrical, square or any other shape. For example, Fig. 2 shows an example of a secondary battery 5 having a square structure.

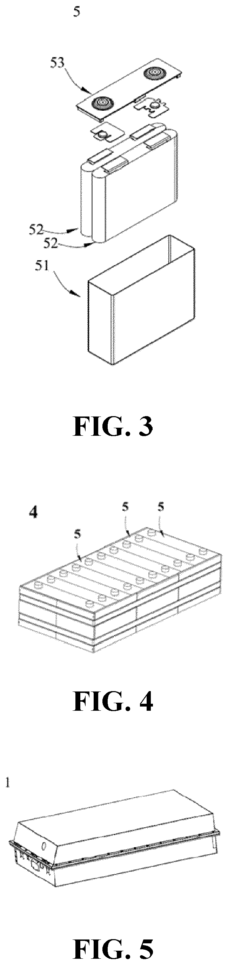

In some embodiments, referring to Fig. 3, the outer package may include a case 51 and a cover plate 53. Here, the case 51 can include a bottom plate and a side plate connected to the bottom plate, with the bottom plate and the side plate enclosing to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, which can be selected by those skilled in the art according to specific actual requirements.

In some embodiments, the secondary batteries may be assembled into a battery module, and the number of the secondary batteries included in the battery module may be one or more, and the specific number may be selected by those skilled in the art according to the application and capacity of the battery module.

Fig. 4 shows a battery module 4 as an example. Referring to Fig. 4, in the battery module 4, a plurality of secondary batteries 5 may be sequentially arranged along a length direction of the battery module 4. Of course, they can be arranged in any other way. The plurality of secondary batteries 5 may further be fixed by fasteners.

Optionally, the battery module 4 can further include a case having an accommodating space, in which the plurality of secondary batteries 5 are accommodated.

In some embodiments, the battery module may further be assembled into a battery pack, the number of battery module contained in the battery pack may be one or more, and the specific number can be selected by those skilled in the art according to the use and capacity of the battery pack.

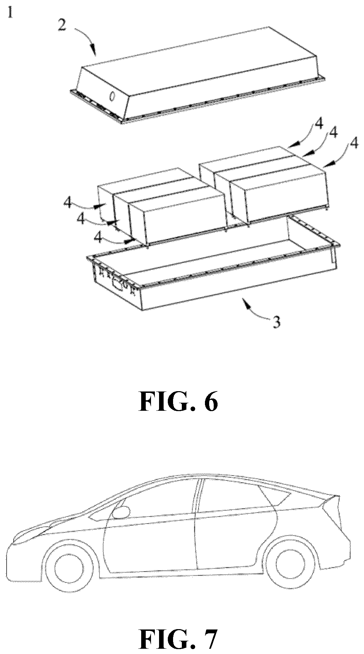

Figs. 5 and 6 show a battery pack 1 as an example. Referring to Figs. 5 and 6, the battery pack 1 may comprise a battery box and a plurality of battery modules 4 provided in the battery box. The battery box includes an upper box body 2 and a lower box body 3, the upper box body 2 can cover the lower box body 3 to form a closed space for accommodating the battery modules 4. The plurality of battery modules 4 may be arranged in the battery box in any manner.

In addition, the present application further provides an electrical apparatus, and the electrical apparatus includes at least one of the secondary batteries, the battery module or the battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack can be selected according to the requirements during use.

Fig. 7 shows an electrical apparatus as an example. The electrical apparatus is a all-electric vehicle, a hybrid electric vehicle or a plug-in hybrid electric vehicle, and the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

### Examples

Examples of the present application will be described hereinafter. The examples described below are exemplary and only used to explain the present application, and are not to be construed as limiting the present application. Where specific techniques or conditions are not specified in the examples, the techniques or conditions described in the literature of the art or the product specifications are followed. All of the used agents or instruments which are not specified with the manufacturer are conventional commercially-available products.

### I. Preparation method

### Example 1

1) Preparation of core-shell polymers
   First-stage polymerization: 21kg of deionized water with a conductivity of less than or equal to 2 µs/cm, 21g of sodium perfluorooctanoate, and 71.4g of 5% potassium persulfate solution were added to a reactor in sequence, and then the reactor was closed;
   the reactor was vacuumized, filled with nitrogen, which process was repeated until the oxygen concentration in the reactor was less than 100ppm;
   vinylidene fluoride monomer was introduced into the reactor until the pressure inside the reactor was 7.0MPa; the temperature in the reactor was heated to 80°C to start the reaction, and during the reaction, the vinylidene fluoride monomer was continuously introduced to keep the reaction pressure in the reactor unchanged;
   second-stage polymerization: the remaining 9kg of deionized water (with a conductivity of less than or equal to 2µs/cm), 60g of polyoxyethylene-4-phenol ether ammonium sulfate, 1.5kg of styrene monomer and 1.5 kg of acrylic acid monomer were introduced into an agitator tank and stirred evenly to obtain a premix;
   when the total amount of vinylidene fluoride monomer introduced was 2.4kg, the remaining 30.6g of 5% potassium persulfate solution and 48.0g of 5% ammonium persulfate were added, the reaction pressure was adjusted to 5.5MPa, and the temperature was increased to 90°C; the premix was slowly added into the reactor over 1.5 h, and at the same time, the remaining 0.6kg of vinylidene fluoride monomer was gradually introduced;
   the reaction was stopped when the pressure in the reactor dropped to 0.2MPa;
   the reaction mixture was cooled to room temperature, filtered and taken out to obtain an emulsion of a core-shell vinylidene fluoride-acrylic acid-styrene copolymer with a Dv50 particle size of 400 nm.
2) Preparation of water-based primer slurry
   The solid content of the emulsion of the core-shell vinylidene fluoride-acrylic acid-styrene copolymer was adjusted to 25%;
   2.25kg of conductive carbon black powder and 9kg of the emulsion of the core-shell vinylidene fluoride-acrylic acid-styrene copolymer were weighed and added to the agitator tank in sequence;
   the stirring speed was set at 300 rpm and the stirring time was 10 min;
   the stirring speed was set at 2000 rpm and the stirring time was 120 min;
   25.5kg of deionized water was weighed and added to the agitator tank, the stirring speed was set at 2000 rpm and the stirring time was 120 min,
   the above slurry was filtered using a 300 mesh filter to obtain a water-based primer slurry.
3) Preparation of water-based prime coat
   The water-based primer slurry was coated on the surface of an aluminum foil current collector substrate using a gravure coater, and oven dried to obtain a water-based prime coat with a thickness of 2um, that is, a water-based primer current collector.
4) Preparation of electrode plate
   The components used to make the positive electrode film layer, that is, lithium nickel cobalt manganese (NCM), conductive agent carbon black, polyvinylidene fluoride binder, and N-methyl pyrrolidone (NMP) were stirred and sufficiently mixed in a weight ratio of 96.9:2.1:1:21 to provide a positive electrode slurry with a solid content of 73%. Then, the positive electrode slurry was uniformly coated on the water-based primer current collector, and then oven dried, cold pressed, and slit to provide the positive electrode plate.
5) Preparation of negative electrode plate
   An active material artificial graphite, a conductive agent carbon black, a binder styrene butadiene rubber (SBR), and a thickener sodium hydroxymethyl cellulose (CMC-Na) were dissolved in a solvent deionized water at a weight ratio of 96.2:0.8:0.8:1.2. The solution was sufficiently mixed to prepare a negative electrode slurry. The negative electrode slurry was uniformly coated on a copper foil of the negative electrode current collector once or more than once, oven dried, cold pressed, and slit to provide the negative electrode plate.
6) Separator
   A polypropylene film was used as the separator.
7) Preparation of electrolyte solution
   In a glove box in an argon atmosphere (H₂O<0.1ppm, O₂<0.1ppm), an organic solvent of ethylene carbonate (EC)/ethyl methyl carbonate (EMC) was mixed uniformly in a volume ratio of 3/7, 12.5% LiPF₆ lithium salt was added to dissolve in the organic solvent and stirred uniformly to obtain the electrolyte solution of Example 1.
8) Preparation of battery
   The positive electrode plate, the separator and the negative electrode plate were stacked in sequence, so that the separator was positioned between the positive electrode plate and the negative electrode plate and functioned to separate, and then a bare battery cell was obtained by winding, a tab was welded to the bare battery cell, the bare battery cell was put into an aluminum case, baked at 80°C to remove water, and then the electrolyte solution was injected, and an uncharged battery was obtained after sealing. The uncharged battery then went through procedures such as standing, hot and cold pressing, chemical formation, reshaping and capacity testing successively to obtain the lithium-ion battery product of Example 1.

### Example 2 to Example 9

The preparation method is basically the same as that of Example 1, except that the mass content of the core portion and the shell portion and the percentages of the monomers in the synthesis of the core-shell polymer are adjusted. The specific parameters are shown in Table 1 and Table 2.

### Example 10 to Example 13

The preparation method is basically the same as that of Example 1, except that the initiator mass and reaction temperature in the synthesis of core-shell polymers are adjusted so that the core-shell polymers have different weight average molecular weights. The specific parameters are shown in Tables 1 and 2.

### Example 10

The preparation method is basically the same as that of Example 1, except that the 5% potassium persulfate solution in the first-stage polymerization is adjusted to 85.32g. See Table 1 and Table 2 for specific parameters.

### Example 11

The preparation method is basically the same as that of Example 1, except that the 5% concentration potassium persulfate solution in the first-stage polymerization is adjusted to 78.54g. See Table 1 and Table 2 for specific parameters.

### Example 12

The preparation method is basically the same as that of Example 1, except that the 5% potassium persulfate solution in the first-stage polymerization is adjusted to 64.26g, and the reaction temperature in the first-stage polymerization is adjusted to 75°C. See Table 1 and Table 2 for specific parameters.

### Example 13

The preparation method is basically the same as that of Example 1, except that the 5% potassium persulfate solution in the first-stage polymerization is adjusted to 60g, and the reaction temperature in the first-stage polymerization is adjusted to 75°C. See Table 1 and Table 2 for specific parameters.

### Example 14 to Example 17

The preparation method is basically the same as that of Example 1, except that the mass ratio of the conductive agent to the binder in the water-based primer slurry is adjusted. The specific parameters are shown in Table 1 and Table 2.

### Example 18 to Example 21

The preparation method is basically the same as that of Example 1, except that the solid content of the water-based primer slurry is adjusted. The specific parameters are shown in Table 1 and Table 2.

### Example 22 to Example 23

The preparation method is basically the same as that of Example 1, except that the thickness of the water-based prime coat is adjusted. The specific parameters are shown in Table 1 and Table 2.

### Example 24

The preparation method is basically the same as that of Example 1, except that the acrylic acid monomer is replaced by methacrylic acid monomer. See Table 1 and Table 2 for specific parameters.

### Example 25

It is basically the same as Example 1, except that the preparation method of the water-based prime coat is adjusted. The specific preparation method is:
the water-based primer slurry was coated on the surface of the aluminum foil current collector substrate using the scraper technique, dried to form a water-based prime coat with a thickness of 2 microns to obtain a water-based primer current collector, and see Table 1 and Table 2 for specific parameters.

### Examples 26-27

Examples 26-27 are basically the same as Example 1, except that the thickness of the water-based prime coat is adjusted. The specific parameters are shown in Table 1 and Table 2.

### Comparative Example 1

The preparation method is basically the same as that of Example 1, except that the binder in the conductive slurry is polyvinylidene fluoride with a weight average molecular weight of 400,000.

### Comparative Example 2

The preparation method is basically the same as that of Example 1, except that 1.5 kg of styrene monomer and 1.5 kg of acrylic acid monomer in the second-stage polymerization are adjusted to 3 kg of styrene monomer.

### Comparative Example 3

The preparation method is basically the same as that of Example 1, except that 1.5 kg of styrene monomer and 1.5 kg of acrylic acid monomer in the second-stage polymerization are adjusted to 3 kg of acrylic acid monomer.

### Comparative Example 4

The preparation method is basically the same as that of Example 1, except that the 5 core-shell vinylidene fluoride-acrylic acid-styrene copolymer emulsion is replaced by the vinylidene fluoride-acrylic acid-styrene copolymer emulsion prepared by the traditional method, the synthesis method of which is as follows:
30kg of deionized water (with a conductivity less than or equal to 2µs/cm), 21g of sodium perfluorooctanoate and 150g of 5% potassium persulfate solution were sequentially added into a reactor, and then the reactor was closed;
the reactor was vacuumized, filled with nitrogen, which process was repeated until the oxygen concentration in the reactor was less than 100ppm;
vinylidene fluoride monomer, 1.5kg of styrene monomer, and 1.5kg of acrylic acid monomer were introduced into the reactor until the pressure inside the reactor was 7.5MPa;
the temperature in the reactor was raised to 85°C to start the reaction, and during the reaction, the vinylidene fluoride monomer was continuously introduced to maintain the reaction pressure in the reactor constant, the total mass of the vinylidene fluoride monomer introduced was 3kg;
when the reaction was completed, the pressure in the reactor would reach 0.2MPa, and the unreacted vinylidene fluoride monomer was recovered; the reaction mixture was cooled to room temperature, filtered and taken out to an emulsion, that is, a vinylidene fluoride-acrylic acid-styrene copolymer emulsion.

### II. Test methods

1. Weight average molecular weight of core-shell polymer
   The emulsion comprising the core-shell polymer was vacuum dried at 120°C for 180 min to obtain core-shell polymer powder;
   A Waters 2695 Isocratic HPLC gel chromatograph (differential refraction detector 2141) was used. A polystyrene solution sample with a mass fraction of 3.0% was used as a reference, and a matching chromatographic column (oil-based: Styragel HT5DMF7.8×300 mm+Styragel HT4) was selected. A 3.0% core-shell polymer solution was prepared using purified N-methyl pyrrolidone (NMP) solvent. The prepared solution was left to stand for one day for later use. When testing, first, tetrahydrofuran was drawn with a syringe to rinse the syringe, which was repeated several times. Then 5 ml of the test solution was drawn, the air was removed from the syringe, and the needle tip was wiped dry. Finally, the sample solution was slowly injected into the injection port. After the reading became stable, data were obtained and the weight average molecular weight was read.
2. Test of Dv50 particle size of core-shell polymers
   Referring to the GB/T 19077-2016 Particle Size Distribution - Laser Diffraction Methods, a 50ml beaker was used to weigh 0.1g-0.13g of the core-shell polymer emulsion, then 5g of deionized water was weighed, and added to the beaker loaded with the core-shell polymer emulsion. In the beaker, a stirrer with a length of about 2.5mm was put and the beaker was sealed with plastic wrap. The sample was put into an ultrasonic machine for ultrasonic treatment for 5 min, transferred to a magnetic stirrer and stirred at a speed of 500 rpm for 20 min or more, and 2 samples were taken from each batch of products for testing. A laser particle size analyzer was used for measurement, for example the Mastersizer 2000E laser particle size analyzer from Malvern Instruments Ltd. in the U.K.
3. Water-based primer slurry viscosity test
   The viscosity of water-based primer slurries was measured using a rotational viscosity agent. An appropriate rotor was selected, the viscometer rotor was fixed, and the water-based primer slurry was placed under the viscometer rotor so that the slurry just submerged the scale line of the rotor. Instrument model: Shanghai Fangrui NDJ-5S, rotor 62#, rotation speed 30 rpm, applicable slurry viscosity measurement range 0-1000mPa·s; rotor 63#, rotation speed 30 rpm, applicable slurry viscosity measurement range 0-2000mPa·s, test temperature: 25°C, test time 5 min. Data were read as reading became stable.
4. Test of filterability of water-based primer slurry
   A 500ml beaker was taken and placed at the lower end of a 200-mesh filter holder, and 500ml of the water-based primer slurry was taken and placed in the filter for filtration. The time when the volume of the slurry in the beaker reached 300ml was recorded. This time was used to judge the filterability of the slurry. If the filtration time is less than 10s, it indicates that the slurry has good filterability, and is judged as "YES" and recorded as "Y"; if the slurry filtration time is greater than 10s or the slurry cannot penetrate the filter, it indicates that the slurry has poor filterability, and is judged as "NG" and recorded as "N".
5. Difference in solid content of water-based primer slurry after standing for 24 h
   A small piece of electrode plate was taken and weighed in a mass loss rate measuring instrument, the data was recorded as M0 and the instrument was reset;
   The upper layer of water-based primer slurry, a small amount of the slurry was applied on the electrode plate, then the electrode plate was put into the mass loss rate measuring instrument for weighing, the data was recorded as M1;
   The device was closed to start oven drying;
   Thereafter, the weighing data was recorded as M2, and the solid content was calculated, the solid content being (M2-M0)/(M1-M0);
   The same method was used to measure the solid content of the lower water-based primer slurry. The solid content of the lower water-based primer slurry minus the solid content of the upper water-based primer slurry is the difference in solid content after the water-based primer slurry has been left to stand for 24 h.
6. Adhesiveness of electrode plate
   With reference to GB-T2790-1995 National Standard "180° Peeling Strength Experimental Method for Adhesives", the testing process of adhesiveness of the examples of the present application and the comparative examples was as follows: a sample with a width of 30mm and a length of 100-160 mm was cut off by a blade, and a special double-sided adhesive tape with a width of 20mm and a length of 90-150mm was pasted on a steel plate. The positive electrode film layer of the electrode plate sample cut off earlier was pasted on the double-sided adhesive tape, and then rolled three times in the same direction with a 2kg press roll. A paper tape with the same width as the electrode plate and a length of 250mm was fixed on the electrode plate current collector, and fixed with a furrow adhesive tape. The power source of a SUNS tensile machine (sensitivity 1N) was turned on, the indicator light was on, the position-limit block was adjusted to an appropriate position, and the end of the steel plate that was not pasted with the electrode plate was fixed with a lower clamp. The paper tape was folded upward and fixed with an upper clamp, and the position of the upper clamp was adjusted using the "up" and "down" buttons on the manual controller provided on the tensile machine. Then testing was performed and the data was read, the stretching speed was 50mm/min. The force on the electrode plate under force balance was divided by the width of the tape, the resulting data was used as the adhesiveness of the electrode plate per unit length to characterize the binding strength between the material layer on the current collector and the current collector.
7. Film resistance of electrode plate
   The oven dried positive electrode plate was cut on the left, middle and right into small discs with a diameter of 10mm. The power source of an IESTTECH electrode plate resistance meter was turned on, the small disc was put in an appropriate position of the "probe" of the electrode plate resistance meter, the "start" button was clicked, the reading was recorded after it became stable. Each small disc was tested at two positions, and finally the average of six measurements was calculated, which was the film layer resistance of the electrode plate.
8. Battery DC impedance
   The testing process of the battery DC impedance was as follows: at 25°C, the battery corresponding to Example 1 was charged to 4.3 V at a constant current of 1/3*C, and then charged to a current of 0.05 C at a constant voltage of 4.3 V, and laid aside for 5 min. Then, the voltage was recorded as V1. Then, the battery was discharged at 1/3 C for 30 s, the voltage was recorded as V2, the internal resistance DCR of the battery was obtained according to 3* (V2-V1) /C.
9. Thickness of water-based prime coat
   A piece of aluminum foil was taken and placed on a flat tabletop. The aluminum foil exceeded the tabletop by about 5cm. The aluminum foil on the tabletop was pressed to prevent the aluminum foil from moving;
   A micrometer was turned on and reset;
   The thickness of the aluminum foil was tested at 5 points at different positions of the aluminum foil sequentially, the measurements were averaged and the average was recorded as L1;
   The water-based primer slurry was applied on one side of the aluminum foil using a gravure coater and dried; the dried aluminum foil was placed on a flat tabletop. The aluminum foil exceeded the tabletop by about 5cm. The aluminum foil on the tabletop was pressed to prevent the aluminum foil from moving;
   A micrometer was turned on and reset;
   The thickness of the aluminum foil was tested at 5 points at different positions of the aluminum foil sequentially, the measurements were averaged and the average was recorded as L2;
   The thickness of the water-based primer was (L2-L1).

### III. Analysis of test results of the examples and comparative examples

The water-based primer slurries, water-based prime coats and positive electrode plates of the examples and comparative examples were prepared according to the above method, and various parameters were measured. The results are shown in Table 1 and Table 2 below.

**Table 1 Preparation parameters and results of examples and comparative examples**

| No. | Binder | Core portion | | Shell portion | | | | | | Weight average molecular weight (ten thousand) |
|---|---|---|---|---|---|---|---|---|---|---|
| | | Monomer represented by formula I | | Monomer represented by formula I | | Monomer represented by formula II | | Monomer represented by formula III | | |
| | | Name | Mass content | Name | Mass content | Name | Mass content | Name | Mass content | |
| Example 1 | Core-shell vinylidene fluoride-acrylic acid-styrene copolymer | Vinylidene fluoride | 40% | Vinylidene fluoride | 10% | Acrylic acid | 25% | Styrene | 25% | 40 |
| Example 2 | Core-shell vinylidene fluoride-acrylic acid-styrene copolvmer | Vinylidene fluoride | 45% | Vinylidene fluoride | 15% | Acrylic acid | 10% | Styrene | 30% | 40 |
| Example 3 | Core-shell vinylidene fluoride-acrylic acid-styrene copolvmer | Vinylidene fluoride | *50%* | Vinylidene fluoride | 10% | Acrylic acid | 20% | Styrene | 20% | 40 |
| Example 4 | Core-shell vinylidene fluoride-acrylic acid-styrene copolvmer | Vinylidene fluoride | 30% | Vinylidene fluoride | 10% | Acrylic acid | 30% | Styrene | 30% | 40 |
| Example 5 | Core-shell vinylidene fluoride-acrylic acid-styrene copolymer | Vinylidene fluoride | 60% | Vinylidene fluoride | 10% | Acrylic acid | 15% | Styrene | 15% | 40 |
| Example 6 | Core-shell vinylidene fluoride-acrylic acid-styrene copolymer | Vinylidene fluoride | 40% | Vinylidene fluoride | 10% | Acrylic acid | 10% | Styrene | 40% | 40 |
| Example 7 | Core-shell vinylidene fluoride-acrylic acid-styrene copolymer | Vinylidene fluoride | 40% | Vinylidene fluoride | 10% | Acrylic acid | 40% | Styrene | 10% | 40 |
| Example 8 | Core-shell vinylidene fluoride-acrylic acid-styrene copolymer | Vinylidene fluoride | 40% | Vinylidene fluoride | 10% | Acrylic acid | *5%* | Styrene | 45% | 40 |
| Example 9 | Core-shell vinylidene fluoride-acrylic acid-styrene copolymer | Vinylidene fluoride | 40% | Vinylidene fluoride | 10% | Acrylic acid | 45% | Styrene | *5%* | 40 |
| Example 10 | Core-shell vinylidene fluoride-acrylic acid-styrene copolymer | Vinylidene fluoride | 40% | Vinylidene fluoride | 10% | Acrylic acid | 25% | Styrene | 25% | 20 |
| Example 11 | Core-shell vinylidene fluoride-acrylic acid-styrene copolymer | Vinylidene fluoride | 40% | Vinylidene fluoride | 10% | Acrylic acid | 25% | Styrene | 25% | 30 |
| Example 12 | Core-shell vinylidene fluoride-acrylic acid-styrene copolymer | Vinylidene fluoride | 40% | Vinylidene fluoride | 10% | Acrylic acid | 25% | Styrene | 25% | *50* |
| Example 13 | Core-shell vinylidene fluoride-acrylic acid-styrene copolymer | Vinylidene fluoride | 40% | Vinylidene fluoride | 10% | Acrylic acid | 25% | Styrene | 25% | 60 |
| Example 14 | Core-shell vinylidene fluoride-acrylic acid-styrene copolymer | Vinylidene fluoride | 40% | Vinylidene fluoride | 10% | Acrylic acid | 25% | Styrene | 25% | 40 |
| Example 15 | Core-shell vinylidene fluoride-acrylic acid-styrene copolvmer | Vinylidene fluoride | 40% | Vinylidene fluoride | 10% | Acrylic acid | 25% | Styrene | 25% | 40 |
| Example 16 | Core-shell vinylidene fluoride-acrylic acid-styrene copolvmer | Vinylidene fluoride | 40% | Vinylidene fluoride | 10% | Acrylic acid | 25% | Styrene | 25% | 40 |
| Example 17 | Core-shell vinylidene fluoride-acrylic acid-styrene copolvmer | Vinylidene fluoride | 40% | Vinylidene fluoride | 10% | Acrylic acid | 25% | Styrene | 25% | 40 |
| Example 18 | Core-shell vinylidene fluoride-acrylic acid-styrene copolymer | Vinylidene fluoride | 40% | Vinylidene fluoride | 10% | Acrylic acid | 25% | Styrene | 25% | 40 |
| Example 19 | Core-shell vinylidene fluoride-acrylic acid-styrene copolymer | Vinylidene fluoride | 40% | Vinylidene fluoride | 10% | Acrylic acid | 25% | Styrene | 25% | 40 |
| Example 20 | Core-shell vinylidene fluoride-acrylic acid-styrene copolymer | Vinylidene fluoride | 40% | Vinylidene fluoride | 10% | Acrylic acid | 25% | Styrene | 25% | 40 |
| Example 21 | Core-shell vinylidene fluoride-acrylic acid-styrene copolymer | Vinylidene fluoride | 40% | Vinylidene fluoride | 10% | Acrylic acid | 25% | Styrene | 25% | 40 |
| Example 22 | Core-shell vinylidene fluoride-acrylic acid-styrene copolymer | Vinylidene fluoride | 40% | Vinylidene fluoride | 10% | Acrylic acid | 25% | Styrene | 25% | 40 |
| Example 23 | Core-shell vinylidene fluoride-acrylic acid-styrene copolymer | Vinylidene fluoride | 40% | Vinylidene fluoride | 10% | Acrylic acid | 25% | Styrene | 25% | 40 |
| Example 24 | Core-shell vinylidene fluoride-methacrylic acid-styrene copolymer | Vinylidene fluoride | 40% | Vinylidene fluoride | 10% | Methacrylic acid | 25% | Styrene | 25% | 40 |
| Example 25 | Core-shell vinylidene fluoride-methacrylic acid-styrene copolymer not applied using gravure coater | Vinylidene fluoride | 40% | Vinylidene fluoride | 10% | Acrylic acid | 25% | Styrene | 25% | 40 |
| Example 26 | Core-shell vinylidene fluoride-acrylic acid-styrene copolymer | Vinylidene fluoride | 40% | Vinylidene fluoride | 10% | Acrylic acid | 25% | Styrene | 25% | 40 |
| Example 27 | Core-shell vinylidene fluoride-acrylic acid-styrene copolymer | Vinylidene fluoride | 40% | Vinylidene fluoride | 10% | Acrylic acid | 25% | Styrene | 25% | 40 |
| Comparative Example 1 | Vinylidene fluoride polymer | Vinylidene fluoride | 100% | Vinylidene fluoride | / | / | / | / | / | 40 |
| Comparative Example 2 | Vinylidene fluoride-styrene copolymer | Vinylidene fluoride | 40% | Vinylidene fluoride | 10% | / | / | Styrene | *50%* | 40 |
| Comparative Example 3 | Vinylidene fluoride-acrylic acid copolymer | Vinylidene fluoride | 40% | Vinylidene fluoride | 10% | Acrylic acid | *50%* | / | / | 40 |
| Comparative Example 4 | Vinylidene fluoride-acrylic acid-styrene copolymer prepared by traditional method | Vinylidene fluoride | 40% | Vinylidene fluoride | 10% | Acrylic acid | 25% | Styrene | 25% | 40 |

**Table 2 Preparation parameters and results of examples and comparative examples**

| No. | Binder | Water-based primer slurry | | | | | Water-based prime coat | Electrode plate | |
|---|---|---|---|---|---|---|---|---|---|
| | | Mass ratio of conductive agent to binder | Solid content | Viscosity mPa.s | Filtrability | Difference in solid content after standing for 24 h | Thickness/ um | Adhesiveness (N/M) | Film resistance/ Ω |
| Example 1 | Core-shell vinylidene fluoride-acrylic acid-styrene copolymer | 1:1 | 1500% | 500 | Y | 1.2% | 2 | 20 | 0.23 |
| Example 2 | Core-shell vinylidene fluoride-acrylic acid-styrene copolymer | 1:1 | 15.00% | 600 | Y | 1.3% | 2 | 21 | 0.23 |
| Example 3 | Core-shell vinylidene fluoride-acrylic acid-styrene copolymer | 1:1 | 1500% | 700 | Y | 1.1% | 2 | 22 | 0.23 |
| Example 4 | Core-shell vinylidene fluoride-acrylic acid-styrene copolymer | 1:1 | 1500% | 250 | Y | 6.2% | 2 | 9 | 0.23 |
| Example 5 | Core-shell vinylidene fluoride-acrylic acid-styrene copolymer | 1:1 | 15.00% | 900 | Y | 1.1% | 2 | 25 | 0.23 |
| Example 6 | Core-shell vinylidene fluoride-acrylic acid-styrene copolymer | 1:1 | 1500% | 400 | Y | 3.8% | 2 | 18 | 0.23 |
| Example 7 | Core-shell vinylidene fluoride-acrylic acid-styrene copolymer | 1:1 | 1500% | 600 | Y | 1.2% | 2 | 21 | 0.23 |
| Example 8 | Core-shell vinylidene fluoride-acrylic acid-styrene copolymer | 1:1 | 1500% | 250 | Y | 5.5% | 2 | 15 | 0.23 |
| Example 9 | Core-shell vinylidene fluoride-acrylic acid-styrene copolymer | 1:1 | 1500% | 900 | Y | 1.1% | 2 | 22 | 0.23 |
| Example 10 | Core-shell vinylidene fluoride-acrylic acid-styrene copolymer | 1:1 | 1500% | 300 | Y | 50% | 2 | 12 | 0.23 |
| Example 11 | Core-shell vinylidene fluoride-acrylic acid-styrene copolymer | 1:1 | 1500% | 400 | Y | 4.2% | 2 | 18 | 0.23 |
| Example 12 | Core-shell vinylidene fluoride-acrylic acid-styrene copolymer | 1:1 | 1500% | 600 | Y | 1.2% | 2 | 21 | 0.23 |
| Example 13 | Core-shell vinylidene fluoride-acrylic acid-styrene copolymer | 1:1 | 1500% | 700 | Y | 0.9% | 2 | 22 | 0.27 |
| Example 14 | Core-shell vinylidene fluoride-acrylic acid-styrene copolymer | 0.6:1 | 15.00% | 750 | Y | 0.9% | 2 | 23 | 0.31 |
| Example 15 | Core-shell vinylidene fluoride-acrylic acid-styrene copolymer | 0.8:1 | 15.00% | 450 | Y | 3.2% | 2 | 22 | 0.28 |
| Example 16 | Core-shell vinylidene fluoride-acrylic acid-styrene copolymer | 0.9:1 | 1500% | 400 | Y | 45% | 2 | 20 | 0.26 |
| Example 17 | Core-shell vinylidene fluoride-acrylic acid-styrene copolymer | 1.2:1 | 15.00% | 250 | Y | 5.6% | 2 | 15 | 0.08 |
| Example 18 | Core-shell vinylidene fluoride-acrylic acid-styrene copolymer | 1:1 | 8.00% | 250 | Y | 6.2% | 2 | 12 | 0.23 |
| Example 19 | Core-shell vinylidene fluoride-acrylic acid-styrene copolymer | 1:1 | 1200% | 380 | Y | 40% | 2 | 18 | 0.23 |
| Example 20 | Core-shell vinylidene fluoride-acrylic acid-styrene copolymer | 1:1 | 20.00% | 700 | Y | 1.1% | 2 | 22 | 0.23 |
| Example 21 | Core-shell vinylidene fluoride-acrylic acid-styrene copolymer | 1:1 | 25.00% | 900 | Y | 0.8% | 2 | 25 | 0.23 |
| Example 22 | Core-shell vinylidene fluoride-acrylic acid-styrene copolymer | 1:1 | 1500% | 500 | Y | 1.1% | 1 | 11 | 0.17 |
| Example 23 | Core-shell vinylidene fluoride-acrylic acid-styrene copolymer | 1:1 | 1500% | 500 | Y | 1.2% | 3 | 28 | 0.35 |
| Example 24 | Core-shell vinylidene fluoride-methacrylic acid-styrene copolymer | 1:1 | 15.00% | 580 | Y | 1.1% | 2 | 21 | 0.23 |
| Example 25 | Core-shell vinylidene fluoride-acrylic acid-styrene copolymer not applied using gravure coater | 1:1 | 1500% | 500 | Y | 1.0% | 2 | 10 | 0.3 |
| Example 26 | Core-shell vinylidene fluoride-acrylic acid-styrene copolymer | 1:1 | 1500% | 500 | Y | 1.1% | 0.5 | 8 | 0.45 |
| Example 27 | Core-shell vinylidene fluoride-acrylic acid-styrene copolymer | 1:1 | 1500% | 500 | Y | 1.1% | 4.5 | 36 | 0.5 |
| Comparative Example 1 | Vinylidene fluoride polymer | 1:1 | 15.00% | 1200 | N | 0.9% | 2 | 28 | 0.23 |
| Comparative Example 2 | Vinylidene fluoride-styrene copolymer | 1:1 | 1500% | 220 | Y | 8.0% | 2 | 8.5 | 0.23 |
| Comparative Example 3 | Vinylidene fluoride-acrylic acid copolymer | 1:1 | 1500% | 950 | Y | 0.9% | 2 | 24 | 0.23 |
| Comparative Example 4 | Vinylidene fluoride-acrylic acid-styrene copolymer prepared by traditional method | 1:1 | 15.00% | 1000 | N | 50% | 2 | 25 | 0.32 |

According to the results in Table 1 and Table 2, it can be seen that the binders in the water-based primer slurries in Examples 1 to 27 are all core-shell polymers including a core portion and a shell portion at least partially covering the core portion. The core portion comprises structural units derived from vinylidene fluoride, the shell portion comprises structural units derived from vinylidene fluoride, structural units derived from acrylic acid or methacrylic acid, and structural units derived from styrene. Good results have been achieved by using the above-mentioned core-shell vinylidene fluoride -acrylic acid-styrene copolymer or core-shell vinylidene fluoride-methacrylic acid-styrene copolymer as binder. Compared with the traditional polyvinylidene fluoride binder in Comparative Example 1, the core-shell vinylidene fluoride-acrylic acid-styrene copolymer or core-shell vinylidene fluoride-methacrylic acid-styrene copolymer binder provided in the present application can reduce the viscosity of the water-based primer slurry, increase the filterability of the water-based primer slurry, and improve the processability of the water-based primer slurry.

From the comparison between Example 1 and the vinylidene fluoride-styrene copolymer and vinylidene fluoride-acrylic acid copolymer in Comparative Example 2 and Comparative Example 3, the core-shell vinylidene fluoride-acrylic acid-styrene copolymer disclosed in the present application can take into account both the slurry's anti-settling properties and the electrode plate's adhesion, and comprehensively improve the storage and usability of the water-based primer slurry.

From the comparison between Example 1 and Comparative Example 4, it can be seen that compared with the non-core-shell polymers prepared by the traditional preparation methods, the core-shell polymer disclosed in the present application can reduce the viscosity of the slurry, improve the filterability of the slurry, improve the adhesion of the electrode plate and reduce the film resistance of the electrode plate, and comprehensively improve the processability and usability of the water-based primer slurry.

From the comparison between Examples 1 to 3 and Examples 4 to 5, it can be seen that the mass content of the core portion is 40% to 50% based on the total mass of the core-shell polymer, and the core-shell polymer can take into account the viscosity of the slurry and the adhesion of the electrode plate, and comprehensively improve the processability and usability of the water-based primer slurry.

From the comparison of Example 1, Examples 6-7 and Examples 8-9, it can be seen that the mass content of structural units derived from acrylic acid in the core-shell polymer is 10%-40% based on the mass of the core-shell polymer, and the core-shell polymer can take into account the viscosity of the water-based primer slurry and the adhesiveness of the electrode plate, and comprehensively improve the processability and usability of the water-based primer slurry.

From the comparison of Example 1, Examples 4-5 and Examples 6-7, it can be seen that the mass content of structural units derived from styrene in the core-shell polymer is 10%-40% based on the mass of the core-shell polymer, and the core-shell polymer can take into account the adhesiveness and film resistance of the electrode plate, and comprehensively improve the adhesion and dynamic performance of the electrode plate.

From the comparison between Example 1, Examples 11-12 and Example 10, Example 13, it can be seen that when the weight average molecular weight of the core-shell polymer is 300,000-500,000, the core-shell polymer can take into account the adhesiveness and film resistance of the electrode plate, and comprehensively improve the adhesion and dynamic performance of the electrode plate.

The water-based primer slurries in Examples 1-27 all include a core-shell polymer, a conductive agent and water, wherein the core-shell polymer is added to the water-based coat slurry in the form of emulsion.

From the comparison between Example 1, Examples 15-16 and Example 14, Example 17, it can be seen that the mass ratio of the conductive agent to the core-shell binder in the water-based primer slurry is 0.8:1-1:1, which can take into account the adhesiveness and film resistance of the slurry electrode plate, and comprehensively improve the adhesion and dynamic performance of the electrode plate.

From the comparison between Example 1, Examples 19-20 and Example 18, Example 21, it can be seen that the solid content of the water-based primer slurry is 10%-20%, and the water-based primer slurry takes into account both the shipping viscosity and the adhesiveness of the electrode plate, and comprehensively improves the processability and usability of the slurry.

As can be seen from Examples 1-17, 19-20 and 22-24, when the solid content of the water-based primer slurry is 10%-20%, the viscosity of the water-based primer slurry is 300mPa.s to 900mPa.s, which makes it unnecessary to add additional dispersants or thickeners to the water-based primer slurry prepared from the core-shell binder to improve the processability, helping improve production efficiency and optimize production processes.

The preparation methods of the water-based prime coat in Examples 1 to 24 all include the following steps:
coating the prepared primer slurry on the surface of a current collector by using a gravure coater;
drying to obtain a water-based prime coat with a thickness of 1um to 3um.

From the comparison between Example 1 and Example 25, it can be seen that the water-based prime coat prepared by the preparation method disclosed in the present application can improve the adhesiveness of the electrode plate and reduce the film resistance of the electrode plate.

From the comparison of Example 1, Examples 22-23 and Examples 26-27, it can be seen that the coating thickness of the water-based prime coat is 1um-3um, which can reduce the film resistance of the electrode plate, and at the same time, make the electrode plate have good adhesiveness, and improve the dynamic performance of the battery.

It should be noted that the present application is not limited to the embodiments above. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A core-shell polymer comprising a core portion and a shell portion at least partially covering the core portion, the core portion comprising a structural unit derived from a monomer represented by Formula I, the shell portion comprising a structural unit derived from a monomer represented by Formula I, a structural unit derived from a monomer represented by Formula II, and a structural unit derived from a monomer represented by Formula III, 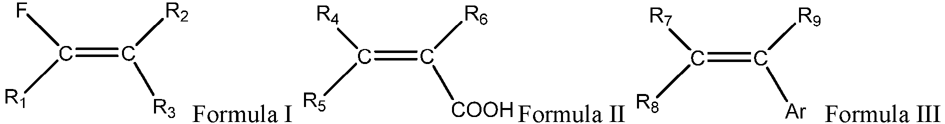 wherein, R₁, R₂ and R₃ are each independently selected from hydrogen, fluorine, chlorine or C₁₋₃ alkyl containing at least one fluorine atom, R₄, R₅, R₆, R₇, R₈, R₉ are each independently selected from hydrogen, substituted or unsubstituted C₁₋₅ alkyl, and Ar is substituted or unsubstituted aryl.

2. The core-shell polymer according to claim 1, wherein the R₁ is fluorine, the R₂ and R₃ are each independently selected from hydrogen, fluorine, chlorine or trifluoromethyl, the R₄, R₅, R₆, R₇, R₈, R₉ are each independently selected from hydrogen or methyl.

3. The core-shell polymer according to claim 1 or 2, wherein the mass content of the core portion is 40% to 50%, based on the mass of the core-shell polymer.

4. The core-shell polymer according to any one of claims 1 to 3, wherein the mass content of the structural unit derived from the monomer represented by Formula II is 10% to 40%, based on the mass of the core-shell polymer.

5. The core-shell polymer according to any one of claims 1 to 4, wherein the mass content of the structural unit derived from the monomer represented by Formula III is 10% to 40%, based on the mass of the core-shell polymer.

6. The core-shell polymer according to any one of claims 1 to 5, wherein the weight average molecular weight of the core-shell polymer is 300,000-500,000.

7. The core-shell polymer according to any one of claims 1 to 6, wherein the monomer represented by Formula I is selected from one or more of vinylidene fluoride, tetrafluoroethylene, chlorotrifluoroethylene, and hexafluoropropylene.

8. The core-shell polymer according to any one of claims 1 to 7, wherein the monomer represented by Formula II is selected from one or two of acrylic acid and methacrylic acid.

9. The core-shell polymer according to any one of claims 1 to 8, wherein the monomer represented by Formula III is selected from one or two of styrene and 4-methylstyrene.

10. The core-shell polymer according to any one of claims 1 to 9, wherein the Dv50 particle size of the core-shell polymer is 100nm-10µm.

11. A preparation method of core-shell polymers, comprising the following steps,
polymerizing a monomer represented by Formula I under polymerizable conditions to prepare a core portion of the core-shell polymer, and polymerizing a monomer represented by Formula I, a monomer represented by Formula II and a monomer represented by Formula III to prepare a shell portion of the core-shell polymer at least partially covering the core portion, 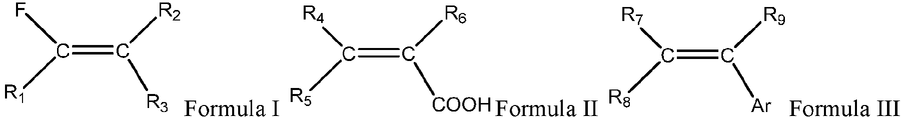
wherein, R₁, R₂ and R₃ are each independently selected from one or more of hydrogen, fluorine, chlorine, and C₁₋₃ alkyl containing at least one fluorine atom, R₄, R₅, R₆, R₇, R₈, R₉ are each independently selected from one or more of hydrogen, substituted or unsubstituted C₁₋₅ alkyl, and Ar is substituted or unsubstituted aryl.

12. The preparation method of core-shell polymers according to claim 11, wherein the R₁ is fluorine, the R₂ and R₃ are each independently selected from one or more of hydrogen, fluorine, chlorine and trifluoromethyl, and the R₄, R₅, R₆, R₇, R₈, R₉ are each independently selected from one or two of hydrogen or methyl.

13. The preparation method of core-shell polymers according to claim 11 or 12, wherein the mass content of the core portion is 40% to 50%, based on the mass of the core-shell polymer.

14. The preparation method of core-shell polymers according to any one of claims 11 to 13, wherein the mass content of the monomer represented by Formula II is 10% to 40%, based on the total mass of the monomer represented by Formula I, the monomer represented by Formula II and the monomer represented by Formula III.

15. The preparation method of core-shell polymers according to any one of claims 11 to 14, wherein the mass content of the monomer represented by Formula III is 10% to 40%, based on the total mass of the monomer represented by Formula I, the monomer represented by Formula II and the monomer represented by Formula III.

16. The preparation method of core-shell polymers according to any one of claims 11 to 15, wherein the preparation method comprises a first-stage polymerization and a second-stage polymerization,
first-stage polymerization: providing an initiator, a first emulsifier, at least one monomer represented by Formula I, and a water-based medium to perform the first-stage polymerization to obtain the core portion, wherein the monomer represented by Formula I is continuously introduced during the first-stage polymerization;
second-stage polymerization: after reacting for a period of time, adding an initiator, a second emulsifier, at least one monomer represented by Formula II and monomer represented by Formula III, and a water-based medium into the reaction vessel to perform the second-stage polymerization to obtain the core-shell polymer, wherein the monomer represented by Formula I is continuously introduced during the second-stage polymerization.

17. The preparation method of core-shell polymers according to claim 16, wherein the second-stage polymerization comprises:
adding the initiator into the reaction vessel, and then adding a premix comprising a second emulsifier, at least one monomer represented by Formula II, monomer represented by Formula III, and a water-based medium.

18. The preparation method of core-shell polymers according to claim 16 or 17, wherein the mass of the monomer represented by Formula I introduced in the first-stage polymerization is 70% to 85% of the total mass of the monomer represented by Formula I supplied in the polymerization, and the mass of the monomer represented by Formula I introduced in the second-stage polymerization is 15% to 30% of the total mass of the monomer represented by Formula I introduced during the polymerization.

19. The preparation method of core-shell polymers according to any one of claims 16 to 18, wherein the initiator provided in the first-stage polymerization and the initiator provided in the second-stage polymerization are both persulfates, the mass percentage of the initiator provided in the first-stage polymerization is 0.05% to 0.075%, and the mass percentage of the initiator provided in the second-stage polymerization is 0.05% to 0.075%, based on the total mass of the monomer represented by Formula I, the monomer represented by Formula II and the monomer represented by Formula III.

20. The preparation method of core-shell polymers according to any one of claims 16 to 19, wherein the mass content of the first emulsifier is 0.28% to 0.42%, based on the total mass of the monomer represented by Formula I, the monomer represented by Formula II and the monomer represented by Formula III.

21. The preparation method of core-shell polymers according to any one of claims 16 to 20, wherein the mass content of the second emulsifier is 0.8% to 1.2%, based on the total mass of the monomer represented by Formula I, the monomer represented by Formula II and the monomer represented by Formula III.

22. The preparation method of core-shell polymers according to any one of claims 16 to 21, wherein the mass percentage of the water-based medium provided in the first-stage polymerization is 200% to 500%, and the mass percentage of the water-based medium provided in the second-stage polymerization is 100% to 200%, based on the total mass of the monomer represented by Formula I, the monomer represented by Formula II and the monomer represented by Formula III.

23. The preparation method of core-shell polymers according to any one of claims 16 to 22, wherein the reaction pressure of the first-stage polymerization is 5.5MPa to 7.5MPa, and the reaction temperature is 75°C to 85°C.

24. The preparation method of core-shell polymers according to any one of claims 16 to 23, wherein the reaction pressure of the second-stage polymerization is 4.5MPa to 6.5MPa, and the reaction temperature is 86°C to 95°C.

25. The preparation method of core-shell polymers according to any one of claims 16 to 24, wherein the initiator is selected from one or two of potassium persulfate and ammonium persulfate.

26. The preparation method of core-shell polymers according to any one of claims 16 to 25, wherein the first emulsifier is an alkali metal perfluorooctanoate.

27. The preparation method of core-shell polymers according to any one of claims 16 to 26, wherein the second emulsifier is one or two of polyoxyethylene-4-phenol ether ammonium sulfate and nonylphenol polyoxyethylene ether ammonium sulfate.

28. A polymer emulsion, comprising the core-shell polymer according to any one of claims 1 to 10.

29. Use of the core-shell polymer according to any one of claims 1 to 10 in secondary batteries.

30. A water-based primer slurry, comprising a binder, a conductive agent and a water-based medium, wherein the binder comprises the core-shell polymer according to any one of claims 1 to 10.

31. The water-based primer slurry according to claim 30, wherein the core-shell polymer is added to the water-based primer slurry in the form of an emulsion comprising the core-shell polymer.

32. The water-based primer slurry according to claim 30 or 31, wherein the mass ratio of the conductive agent to the binder is 0.8:1 to 1:1.

33. The water-based primer slurry according to any one of claims 30 to 32, wherein when the solid content of the water-based primer slurry is 10% to 20%, the viscosity of the water-based primer slurry is 300mPa·s to 900mPa·s.

34. A preparation method of a water-based prime coat, comprising the following steps:
coating the water-based primer slurry according to any one of claims 30 to 33 on the surface of a current collector by using a gravure coater;
drying to obtain a water-based prime coat with a thickness of 1um to 3um.

35. A secondary battery, comprising a positive electrode plate, a separator, a negative electrode plate and an electrolyte solution, wherein the positive electrode plate and/or the negative electrode plate comprise the water-based prime coat prepared by the preparation method according to claim 34.

36. The secondary battery according to claim 35, wherein the secondary battery includes at least one of a lithium-ion battery, a sodium-ion battery, a magnesium-ion battery, and a potassium-ion battery.

37. A battery module, comprising the secondary battery according to claim 35 or 36.

38. A battery pack, comprising at least one selected from the secondary battery according to claim 35 or 36, and the battery module according to claim 34.

39. An electrical apparatus, comprising at least one selected from the secondary battery according to claim 35 or 36, the battery module according to claim 37 or the battery pack according to claim 38.
